Europäisches Patentamt

European Patent Office

Office européen des brevets

(11) Publication number: **0 504 957 A2**

# EUROPEAN PATENT APPLICATION

(21) Application number: **92200483.3**

(22) Date of filing: **18.02.92**

(51) Int. Cl.5: **C09J 5/06**, F16B 11/00, H05B 6/02

(30) Priority: **19.03.91 US 672195**

(43) Date of publication of application:
**23.09.92 Bulletin 92/39**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **McGinnis, Karen L.**
**6520 S. Wintergreen Drive**
**Clinton, Washington 98236(US)**
Inventor: **Pelot, Linda M.**
**4912 136th Pl. S.E.**
**Snohomish, Washington 98290(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Composite panels having aluminum fasteners and induction heating method of attachment.**

(57) Aluminum fasteners for attaching hardware to composite panels utilizing hot melt adhesive disks containing 200 to 400 mesh iron particles.

EP 0 504 957 A2

## BACKGROUND OF THE INVENTION

### (1) Field of the Invention

The present invention related to fasteners, and more particularly to fasteners for attaching hardware to composite panels and method of securing fasteners to composite panels.

### (2) Description of the Prior Art

Making filtercloths which includes fixing components to the cloth including the use of a thermoplastic bonding agent mixed with a ferrous metal powder wherein the bonding agent is induction heated to fuse the parts together is known in the patent literature as illustrated in Heath et al, U.S. Patent No. 4,765,859.

Thermoplastic resin irradiated by a ferromagnetic heating element to generate high frequency - induced heat for melt and bonding is well known as shown e.g. in U.S. Patent No. 4,836,691 to Suzuki et al.

Also, heat activatable plastic material effected by inducing alternating electrical current to provide fastening devices is known as shown in U.S. Patent No. 3,612,803 to Klass.

Current processes have utilized an induction heater to excite electrons within the steel stud resulting in an increase in temperature which is used to melt the attached hot melt adhesive disc.

Other efforts and attempts to optimize and improve the induction heating process included developing an ultraviolet curing adhesive, curing the current steel studs with ultrasonic sound, and developing plastic studs with metal filled adhesives. The process to use ultraviolet curing proved not feasible. In tests, it took approximately 60 seconds to cure compared to 8 seconds by induction per fastener. Also, the transparent studs required for ultraviolet curing tested inferior. Process to use ultrasound was rejected. The process overheated the studs causing texture washout on the decorative side.

Plastic studs containing metal filled adhesives were also rejected. Plastic shanks had low torque strength which would require extensive development work to improve and would produce uncertain results.

## SUMMARY OF THE INVENTION

An object of the present invention included the utilization of non-ferrous aluminum fasteners in lieu of steel fasteners for attaching hardware to composite panels. In the process of securing the aluminum fasteners to composite panels, a hot melt adhesive disk containing 200 to 400 mesh iron particles is excited by induction heating at a frequency related to particle size in accordance with Maxwell's equation for skin depth.

## BRIEF DESCRIPTION OF THE DRAWINGS

Fig. 1 is a sectional view of a prior art steel fastener utilizing a hot melt adhesive disk for attachment to a composite panel;

Fig. 2 is a sectional view of an aluminum fastener utilizing a hot melt adhesive disk containing 200 to 400 mesh iron particles for attachment according to a preferred embodiment of the present invention;

Fig. 3 is a perspective view of the assembly of Fig. 2 also taken prior to attachment of components;

Fig. 4 is a side view taken in section of the assembly of Fig. 3 subsequent to attachment of aluminum fastener to a composite panel utilizing the hot melt disk of Figs. 2 and 3;

Fig. 5 is a perspective view of the ferromagnetic induction heating head and coil of the induction heater of Fig. 6; and,

Fig. 6 is a sectional view of the alternating current induction heater disposed over the assembly of Fig. 4 for generating electromagnetic wave energy in the hot melt adhesive disk for securing the assembly;

Fig. 7 is a Maxwell equation skin depth formula illustrative of the relationship between hot melt adhesive skin particle size and frequency of the electromagnetic wave energy provided by the induction heater of Fig. 4.

## DETAILED DESCRIPTION OF THE INVENTION

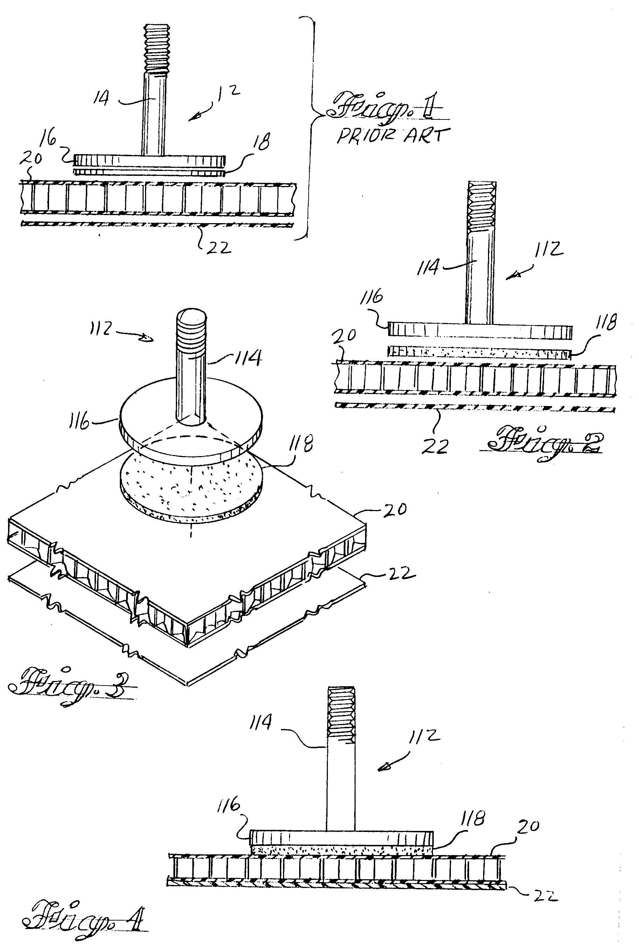

Turning now to Figure 1 there is seen a prior art type steel fastener 12 which has a shank portion 14 and a bottom disk portion 16. When an induction heater 200 of the type shown in Figure 6 is slipped over shank portion and coaxially dispersed therearound and energized with an alternating current, an electromagnetic field is developed in bottom disk portion 16 (since ferromagnetic material) causing heat to flow therefrom and melt hot melt adhesive disk 18 thereby securing bottom disk portion 16 to composite panel 20.

Unfortunately the decorative film 22 on the other side of composite panel 20 suffers by this process from an area of texture washout in the region below bottom disk portion 16 of fastener 12.

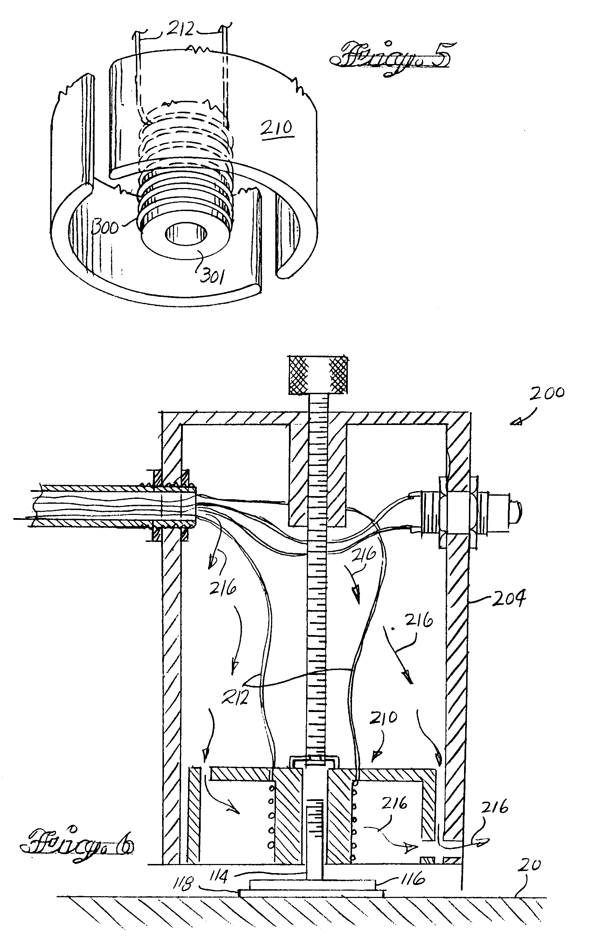

Now, in accordance with a preferred embodiment of the present invention, the present new process and fastener for composites as seen in Figure 2, fastener 112 is made of a non ferrous material comprising aluminum alloy. A hot melt adhesive disk 118 is utilized which, in contrast to hot melt adhesive disk 18, contains 200 to 400 mesh iron particles e.g. 0.002 inches distributed therein.

Iron particle size of 0.002 inch was calculated using Maxwell's equation for skin depth δ shown in Figure 6 related to frequency w of the induction heater current viz. 32 thousand cycles per second. Thus, iron particle size in hot melt adhesive to induction heater operating frequency through Maxwell's equation for skin depth of penetration of electromagnetic waves proved to be satisfactory in the present method of attachment of a non ferrous fastener to composite panels.

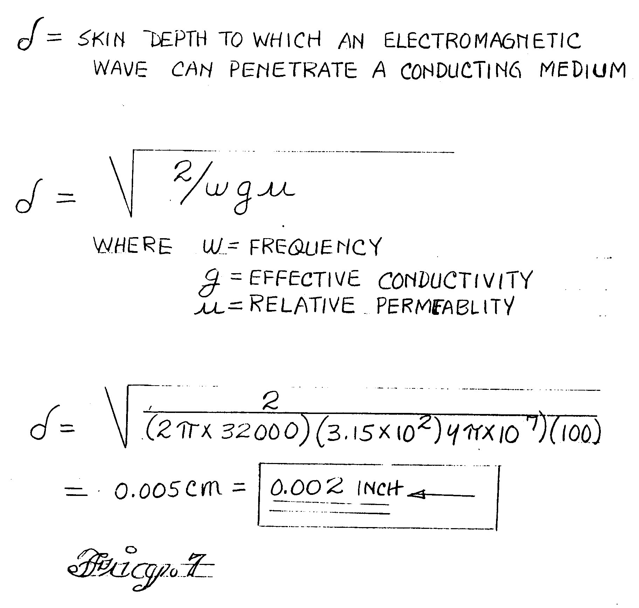

Though not described in much detail since induction heaters are well known, the induction heater 200 of Figure 4 consists of a housing 204 for supporting internally disposed ferromagnetic heating head and coil assembly 210 through which coil conductors 212 the energizing alternating current is caused to flow from a generator (not shown). Also, a cooling air flow path generally denoted by arrows 216 prevents induction heater 200 from overheating. Figure 5 is included to show in more detail ferromagnetic head and coil assembly 210 which comprises coil 300 coaxially disposed about ferromagnetic member 301 for providing electromagnetic field.

Immediate benefits resulted from the hereinbefore described assembly and method for attaching fasteners utilized on composite panel structures and included lighter weight and cost savings for aluminum versus steel, improved aesthetic quality without texture washout, and less labor as a result of less rework.

**Claims**

1. In combination:

   a composite panel structure;

   a non ferrous fastener having a bottom disk portion; and,

   a hot melt adhesive containing 200 to 400 mesh iron particles disposed between said composite panel structure and said bottom disk portion of said non ferrous fastener.

2. The invention according to claim 1 wherein the size of said iron particles is about 0.002 inches.

3. The method of assembling first and second non ferrous structures together which comprise:

   inserting a hot melt adhesive containing particles of a ferrous material having a predetermined size δ between said first and second non ferrous structures; the,

   applying electromagnetic wave energy having a frequency w to said hot melt adhesive containing particles of a ferrous material having a predetermined size δ wherein:

$$\delta = \sqrt{\frac{2}{w\ g\ u}}$$

   Where g = effective conductivity and u = relative permeability.

4. The method of claim 3 where

   w = about $2\pi$ x 32000.

*Fig. 1*
PRIOR ART

*Fig. 2*

*Fig. 3*

*Fig. 4*

4

Fig. 5

Fig. 6

$\delta$ = SKIN DEPTH TO WHICH AN ELECTROMAGNETIC WAVE CAN PENETRATE A CONDUCTING MEDIUM

$$\delta = \sqrt{2/\omega g \mu}$$

WHERE  $\omega$ = FREQUENCY
$g$ = EFFECTIVE CONDUCTIVITY
$\mu$ = RELATIVE PERMEABLITY

$$\delta = \sqrt{\frac{2}{(2\pi \times 32000)(3.15\times 10^2)4\pi \times 10^{-7})(100)}}$$

$= 0.005 \, cm = \boxed{0.002 \, INCH}$

Fig. 7